# EUROPEAN PATENT SPECIFICATION

(11) **EP 1 005 276 B1**
(45) Date of publication and mention of the grant of the patent: **05.01.2005**
(21) Application number: 99917060.8
(22) Date of filing: 23.04.1999
(51) Int. Cl.: A21D 13/08, B65D 85/78

(54) **ICE CREAM HOLDER**
WAFFELTÜTE FÜR SPEISEEIS
CORNET A GLACES

(30) Priority: 27.04.1998 IT RC980003
(43) Date of publication of application: 07.06.2000
(73) Proprietor: Altomare, Giuseppe, 88100 Catanzaro (IT)
(72) Inventor: Altomare, Giuseppe, 88100 Catanzaro (IT)
(86) International application number: PCT/IT1999/000103
(87) International publication number: WO 1999/055163

(56) References cited:
- EP-A1- 0 709 307
- US-A- 1 914 894
- US-A- 4 929 457

## Description

Object of the present invention is an ice cream holder made of material for aliments with a conical shape.

The ice cream holder is made of not absorbent material, single use, comprising a superior part of concave shape forming a collar with a superior edge and an inferior part of conical shape, the wider part of the inferior part of conical shape has fins to support ice cream.

To hold ice cream people normally use small paper napkins, which are hygienic. In this way ice cream cone is not touched directly and does not come in contact with dirty hands. Small paper napkins do not avoid dropping of melted ice cream. Children normally are not so fast in eating ice cream and this melts, so their hands or worst their clothes will be spotted with drops of ice cream.

The purpose of the invention is to realize a holder that prevents ice cream dripping and that allows to push up ice cream cone, if it is too low, keeping eventual ice cream inside the collar.

To prevent that melted ice cream flows along the cone into the hand, patent IT 87/84122 shows a concave collar of paper or other material which can be applied to an ice cream cone. A part of the melted ice cream is so contained in the concave collar, but melted ice cream remains in contact with the biscuit cone, so the wet biscuit will become soft.

Further ice cream holders are disclosed in EP-A-0 709 307, US-A-4 929 457 and US-A-1 914 894.

The present invention as claimed overcomes the difficulties described in the cited prior art.

The principal purpose of the present invention is that ice cream cone is supported with fins in the ice cream holder so to remain apart from the wet surface. The collar and the gap between ice cream cone and holder have a volume sufficient to contain the melted ice cream. The superior edge of the collar is turned towards inside, the wider part of the inferior part of conical shape has fins, to support ice cream, the middle part of the inferior part of conical shape has bellows, the point of the inferior part of conical shape is reinforced inside. Another characteristic is given by the fact that fins have semicircular shape.

Other characteristic and advantages of the invention will appear evident from the following description of some embodiment of the invention given as example from figures A and B
Fig. A represents an embodiment of the invention.
Fig. B represents another embodiment of the invention

Referring to fig. A the ice cream holder is made of one collar 1, in the superior part, with edge 3 turned towards the inside so to form a narrow channel of collection in case of dropping of the ice cream.

Internally the cone 2 which is below the collar 1 has inner fins or supports 4 to hold the ice cream biscuit cone that has been inserted.

The ice cream biscuit is held at a certain distance from the holder and the melted cream can be contained in the conical part and in the collar of the holder.

Referring to fig. B ice cream holder has bellows 5. So the ice cream may be pushed up as it likes acting against the point of the cone 6. The point is reinforced inside the conical part in the terminal part that it concurs with the biscuit cone being pushed towards the high. Such embodiment proposes hygienic conditions in the consumption of the ice cream with a system single use of protection from handling and dropping, because ice cream remains captured in the holder, avoiding to soil hands, dresses and above all children and avoiding the waste of paper napkins and the use of washing and laundry. In conclusion it wants to represent a remedy to assure the best and save consumption of ice cream as well as a great saving of money.

The invention, it is expressly understood, is not limited to the representation given by the drawings but it can receive improvements and modifications by the man skilled in the art without going out from the meaning of the patent. The present invention allows numerous advantages and to overcome difficulties that could not be won with systems actually on the market.

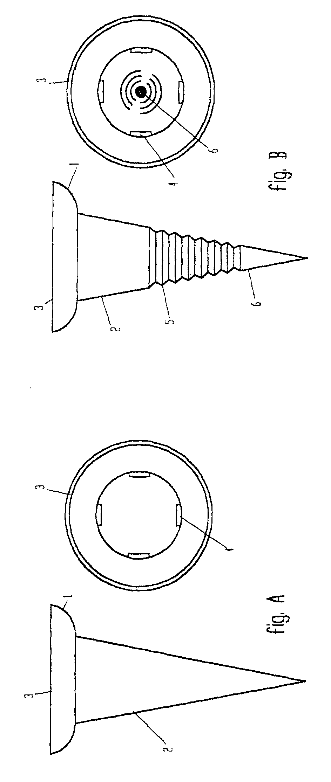

## Claims

1. Ice cream holder made of not absorbent material, single use, comprising a superior part of concave shape (1) forming a collar with a superior edge (3) and an inferior part of conical shape (2) **characterised by** the fact that the superior edge (3) of the collar is turned towards inside, the wider part of the inferior part of conical shape (2) has fins (4) to support ice cream, the middle part of the inferior part of conical shape (2) has bellows (5), the point (6) of the inferior part of conical shape (2) is reinforced inside.

2. Ice cream holder according to claim 1) **characterised by** the fact that fins (4) have rectangular section

3. Ice cream holder according to claim 1) **characterised by** the fact that fins (4) have semicircular section.

## Patentansprüche

1. Eistüte aus saugfähigem Stoff, der einer einzigen Verwendung dient, der einen konkaven Oberteil (1), welcher mit dem oberen Rand (3) einen Hals bilden, und einen kegelförmigen Unterteil (2) hat, **dadurch gekennzeichnet daß** der oberen Rand (3) des Hals nach innen gebogen ist, der breiteste Teil des kegelförmigen Unterteils (2) hat Flossen (4), um das Eis zu enthalten, die Spitze (6) des kegelförmigen Unterteils ist im Inneren befestigt.

2. Eistüte entsprechend Anspruch 1) **dadurch gekennzeichnet daß** Flossen (4) rechteckigen Abschnitt haben.

3. Eistüte entsprechend Anspruch 1) **dadurch gekennzeichnet daß** Flossen (4) halbkreisförmigen Abschnitt haben.

## Revendications

1. Support pour cornet de glace fait de matériel non absorbant, à usage unique, comportant une partie supérieure de forme concave (1) formant un collier avec un bord supérieur (3) et une partie inférieure de forme conique (2) **caractérisée par le fait que** le bord supérieur (3) du collier est tourné vers à l'intérieur, la partie plus large de la partie inférieure de forme conique (2) a des ailettes (4) pour soutenir cornet de glace, la partie moyenne de la partie inférieure de forme conique (2) a le soufflet (5), la pointe (6) de la partie inférieure de forme conique (2) est renforcée à l'intérieur.

2. Support pour cornet de glace selon la revendication 1 **caractérisé par le fait que** les ailettes (4) ont la section rectangulaire.

3. Support pour cornet de glace selon la revendication 1 **caractérisé par le fait que** les ailettes (4) ont la section semi-circulaire.
